# EUROPÄISCHE PATENTANMELDUNG

(11) **EP 1 840 804 A1**
(43) Veröffentlichungstag der Anmeldung: **03.10.2007**
(21) Anmeldenummer: 06005066.3
(22) Anmeldetag: 13.03.2006
(51) Int. Cl.: G06Q 10/00

(54) **Vorrichtung und Verfahren zur Steuerung eines Einsatzes von Objekten**

(71) Anmelder: INIT Innovative Informatikanwendungen in Transport-, Verkehrs- und Leitsystemen GmbH, 76019 Karlsruhe (DE)
(72) Erfinder: Die Erfindernennung liegt noch nicht vor
(74) Vertreter: Dimmerling, Heinz

(57) **Zusammenfassung**

Eine Vorrichtung (1) zur Steuerung eines Einsatzes (E(O)) von Objekten, wie Transportvorrichtungen oder Personen, welche eine zum Vorgeben eines Bedarfs an den Objekten innerhalb wenigstens einer vorbestimmten Zeiteinheit (10, 11, 12) und auf der Grundlage von Elementen, denen die Objekte zugeordnet werden, ausgebildete Eingabeeinheit (3), sowie eine zum Speichern des vorgegebenen Bedarfs in elektronischer Form als Bedarfsvorgabe in einer Datenbank (9) ausgebildete Speichereinheit (5), aufweist, ist gekennzeichnet durch eine zum Erzeugen einer die Zeiteinheit (10, 11, 12) überbrückenden Anordnung (13, 13') der Bedarfsvorgabe aus einzelnen Datenbankeinträgen (10.1, 10.2, ... 10.n; 11.1, 11.2, ..., 11.n'; 12.1, 12.2, ..., 12.n") ausgebildete Anordnungseinheit (7) und eine zum Bestimmen einer zur Deckung des Bedarfs erforderlichen Anzahl einzusetzender Objekte sowie zum Bestimmen von Einsatzcharakteristiken der einzusetzenden Objekte auf der Grundlage der erzeugten Anordnung (13, 13') ausgebildete Bestimmungseinheit (8).

## Beschreibung

Die vorliegende Erfindung betrifft eine Vorrichtung zur Steuerung eines Einsatzes von Objekten, wie Transportvorrichtungen oder Personen, nach dem Oberbegriff des Patentanspruchs 1, welche eine zum Vorgeben eines Bedarfs an den Objekten innerhalb wenigstens einer vorbestimmten Zeiteinheit und auf der Grundlage von Elementen, denen die Objekte zugeordnet werden, ausgebildete Eingabeeinheit, sowie eine zum Speichern des vorgegebenen Bedarfs in elektronischer Form als Bedarfsvorgabe in einer Datenbank ausgebildete Speichereinheit, aufweist.

Weiterhin betrifft die vorliegende Erfindung ein Verfahren zur Steuerung eines Einsatzes von Objekten, wie Transportvorrichtungen oder Personen, nach dem Oberbegriff des Patentanspruchs 9, wobei ein Bedarf an den Objekten innerhalb wenigstens einer vorbestimmten Zeiteinheit und auf der Grundlage von Elementen, denen die Objekte zugeordnet werden, vorgegeben und in elektronischer Form als Bedarfsvorgabe in einer Datenbank gespeichert wird und wobei eine zur Deckung des Bedarfs erforderliche Anzahl von Objekten sowie deren Einsatzcharakteristiken, wie Einsatzort, Einsatzzeit und/oder Einsatzdauer, bestimmt werden.

Darüber hinaus betrifft die vorliegende Erfindung ein Computerprogrammprodukt zur Steuerung eines Einsatzes von Objekten, wie Transportvorrichtungen oder Personen.

Insbesondere, jedoch nicht ausschließlich im Bereich des Transportwesens, wie des öffentlichen Personennahverkehrs (ÖPNV), kommen Verfahren und Vorrichtungen zur Steuerung eines Einsatzes von Objekten der eingangs genannten Art zum Einsatz, um eine zur Deckung eines vorgegebenen Bedarfs erforderliche Anzahl von Objekten und deren Einsatzcharakteristiken, wie Einsatzort, Einsatzzeit und/oder Einsatzdauer zu bestimmen. Im Zuge einer Umlaufplanung kann es sich bei den Objekten beispielsweise um Fahrzeuge, wie U- oder S-Bahnen, Busse, Mietfahrzeuge oder dergleichen handeln. Im Zuge einer Dienstplanung handelt es sich bei den Objekten insbesondere um Fahrpersonal, wobei in beiden Fällen die betreffenden Objekte jeweils bestimmten Elementen zugeordnet werden. Bei diesen Elementen handelt es sich entsprechend um Fahrten/Fahrstrecken innerhalb eines Fahrplans (Umlaufplanung) beziehungsweise Umläufe/Fahrzeuge (Dienstplanung).

Die Bedarfsvorgabe erfolgt dabei auf der Grundlage wenigstens einer vorbestimmten Zeiteinheit, beispielsweise eines Kalender- oder Betriebstages, für die grundsätzlich eine Anfangs- und Endzeit fest vorgegeben ist. Ein typisches Beispiel ist hier die Erstreckung eines Betriebstages von 3.00 bis 27.00 Uhr, was einer kalendertagsübergreifenden Erstreckung des Betriebstages entspricht (bis 3.00 Uhr morgens am folgenden Kalendertag).

Zur Steuerung des vorstehend erläuterten Einsatzes von Objekten kommen heutzutage regelmäßig softwaregestützte Planungssysteme zur Anwendung. Bei bekannten Planungssystemen erfolgt die Umlaufplanung innerhalb eines Betriebstages, zum Beispiel Montag bis Freitag, Samstag, Sonntag und Feiertag. Abhängigkeiten zwischen einzelnen Wochen- und Kalendertagen sind durch eine als Planer eingesetzten Bedienperson des Planungssystems manuell zu berücksichtigen.

Zwar können bei den vorbekannten Systemen die Betriebstage verlängert oder verkürzt werden, es besteht jedoch keine Verknüpfung (Beziehung) zu einem Vor- oder Nachfolgetag, was in der Praxis insbesondere bei der Dienstplanung zu einer erheblichen manuellen Nacharbeit und Korrektur von Planungsdaten in den Bereichen Fahrplan, Umlaufplan und Dienstplan und somit oft zu erheblichen Mehrkosten bei der Planung eines wirtschaftlichen Fahrzeug- und Personaleinsatzes führt. Insbesondere lässt sich durch den Einsatz der vorbekannten Systeme keine optimale Auslastung von Fahrzeugen und Werkstätten, keine optimale Berücksichtigung von Umlauftätigkeiten, wie Fahrzeugvorbereitung, Tanken oder dergleichen, sowie keine Planung sogenannter nachtgeteilter Dienste erreichen.

Der Erfindung liegt die Aufgabe zugrunde, unter Vermeidung der vorstehend genannten Nachteile eine rechnergestützte Möglichkeit zur Steuerung eines Einsatzes von Objekten, wie Transportvorrichtungen oder Personen, anzugeben, bei der eine erforderliche manuelle Nacharbeit und Korrektur von Planungsdaten verringert und somit die Mehrkosten bei der Planung eines wirtschaftlichen Einsatzes der Objekte reduziert sind.

Die Aufgabe wird bei einer Vorrichtung der eingangs genannten Art durch die kennzeichnenden Merkmale des Patentanspruchs 1 gelöst. Vorteilhafte Ausgestaltungen sind Gegenstand von Unteransprüchen.

Erfindungsgemäß ist eine Vorrichtung zur Steuerung eines Einsatzes von Objekten, wie Transportvorrichtungen oder Personen, welche eine zum Vorgeben eines Bedarfs an den Objekten innerhalb wenigstens einer vorbestimmten Zeiteinheit und auf der Grundlage von Elementen, denen die Objekte zugeordnet werden, ausgebildete Eingabeeinheit, sowie eine zum Speichern des vorgegebenen Bedarfs in elektronischer Form als Bedarfsvorgabe in einer Datenbank ausgebildete Speichereinheit, aufweist, gekennzeichnet durch eine zum Erzeugen einer die Zeiteinheit überbrückenden Anordnung der Bedarfsvorgabe aus einzelnen Datenbankeinträgen ausgebildete Anordnungseinheit und eine zum Bestimmen einer zur Deckung des Bedarfs erforderlichen Anzahl einzusetzender Objekte sowie zum Bestimmen von Einsatzcharakteristiken der einzusetzenden Objekte auf der Grundlage der erzeugten Anordnung ausgebildete Bestimmungseinheit.

Weiterhin wird die Aufgabe bei einem Verfahren der eingangs genannten Art durch die kennzeichnenden Merkmale des Patentanspruchs 9 gelöst.

Erfindungsgemäß ist ein Verfahren zur Steuerung eines Einsatzes von Objekten, wie Transportvorrichtungen oder Personen, wobei ein Bedarf an den Objekten innerhalb wenigstens einer vorbestimmten Zeiteinheit und auf der Grundlage von Elementen, denen die Objekte zugeordnet werden, vorgegeben und in elektronischer Form als Bedarfsvorgabe in einer Datenbank gespeichert wird und wobei eine zur Deckung des Bedarfs erforderliche Anzahl von Objekten sowie deren Einsatzcharakteristiken, wie Einsatzort, Einsatzzeit und/oder Einsatzdauer, bestimmt werden, dadurch gekennzeichnet, dass zum Bestimmen der Anzahl und der Einsatzcharakteristiken aus einzelnen Datenbankeinträgen eine die Zeiteinheit überbrückende Anordnung der Bedarfsvorgabe erzeugt und die Einsatzsteuerung auf der Grundlage dieser Anordnung durchgeführt wird.

Darüber hinaus wird die Aufgabe gelöst durch ein Computerprogrammprodukt zur Steuerung eines Einsatzes von Objekten, wie Transportvorrichtungen oder Personen, mit Programmcodesequenzen, bei deren Ausführung in einer Datenverarbeitungsanlage ausgehend von einem innerhalb wenigstens einer vorbestimmten Zeiteinheit und auf der Grundlage von Elementen, denen die Objekte zugeordnet werden, vorgegebenen Bedarf an den Objekten sowie dessen Abspeicherung in elektronischer Form in einer Datenbank ein erfindungsgemäßes Verfahren durchgeführt wird.

Durch das Erzeugen einer die Zeiteinheit überbrückenden Anordnung der Bedarfsvorgabe erreicht die vorliegende Erfindung im Zuge eines tagesübergreifenden Umlauf- und Dienstplanung die bislang fehlende Verknüpfung (Beziehung) zwischen an den Grenzen der wenigstens einen vorbestimmten Zeiteinheit angeordneten Teilen der Bedarfsvorgabe, was zu einer Kostenreduzierung durch wirtschaftlicheren Objekteinsatz führt. Durch die Erfindung ist es möglich, dass mittels der Bestimmungseinheit bei der Deckung des Bedarfs beispielsweise ein am Ende der Zeiteinheit eingesetztes, noch nicht ausgelastetes Objekt bei jenseits der Grenze der Zeiteinheit angeordneten, sich anschließenden Teilen eines Bedarfs berücksichtigt wird, ohne dass hierzu eine aufwändige Nacharbeit und Korrektur von Planungstaten erforderlich wäre.

Als eine Weiterbildung der erfindungsgemäßen Vorrichtung beziehungsweise des erfindungsgemäßen Verfahrens ist bei Auftreten eines wiederkehrenden Bedarfs in Form einer zahlenmäßig beschränkten, sich wiederholenden Abfolge von Zeiteinheiten vorgesehen, dass die Anordnungseinheit zum Erzeugen der überbrückenden Anordnung in Form einer geschlossenen, zylinderartigen Anordnung ausgebildet ist beziehungsweise dass die überbrückende Anordnung in Form einer geschlossenen, zylinderartigen Anordnung erzeugt wird. Durch diese "Zylinderbildung" wird eine quasi unendliche Anordnung der Bedarfsvorgabe geschaffen, auf der anschließend eine kontinuierliche Einsatzsteuerung der Objekte bei unbeschränkter Verknüpfung zu Vor- und Nachfolgetagen realisierbar ist.

Aus Gründen der Kompatibilität mit vorbekannten Planungssystemen sieht eine Weiterbildung der Erfindung vor, dass die Zeiteinheit ein um ein bestimmtes Zeitmaß verschobener und/oder verlängerter oder verkürzter Kalendertag ist.

Anders als bei herkömmlichen Planungssystemen, die gemäß einem Schubladenprinzip auf einen jeweiligen Betriebstag beschränkt sind, kann bei Verwendung der erfindungsgemäßen Vorrichtung beziehungsweise des erfindungsgemäßen Verfahrens durch den Einsatz eines Objekts auf der Grundlage der erzeugten überbrückenden Anordnung wenigstens ein Teil des Bedarfs auf der Grundlage verschiedener Zeiteinheiten gedeckt sein. Dementsprechend ist bei einer Weiterbildung der erfindungsgemäßen Vorrichtung die Bestimmungseinheit zum Bestimmen der Deckung wenigstens eines Teils des Bedarfs durch den Einsatz zumindest eines Objekts auf der Grundlage verschiedener Zeiteinheiten 10, 11 ausgebildet.

Insbesondere bei Anwendungen der Erfindung zu Planungszwecken im Transportwesen, wie dem (ÖPNV), ist bei einer besonderen Ausführungsform der Erfindung vorgesehen, dass der Bedarf aus einer Anzahl zeitlich und/oder örtlich gebundenen Bedarfsposten gebildet ist. Die zeitliche und/oder örtliche Bindung der einzelnen Bedarfsposten ergibt sich insbesondere dadurch, dass die Objekte, zum Beispiel ein Fahrer, nur an bestimmten Orten (Haltestellen) und/oder zu bestimmten Zeiten einem betreffenden Element, wie einem Fahrzeug, zugeordnet (zugeführt) werden kann.

Um beispielsweise tariflich oder arbeitsrechtlich vorgegebene Randbedingungen einhalten zu können, ist bei einer weiteren Ausführungsform der Erfindung vorgesehen, dass ein einzelner Einsatz eines jeweiligen Objekts in seiner Gesamtdauer zeitlich begrenzt ist. Bei einem Einsatz im Transportwesen ist beispielsweise die Lenkzeit eines Fahrers gesetzlich auf eine bestimmte maximale Gesamtdauer begrenzt. Falls es sich bei den Objekten um Transporteinrichtungen, wie Fahrzeuge, handelt, gilt für diese analog ein bestimmtes Wartungsintervall, zum Beispiel zum Betanken, das bei der Einsatzplanung zu berücksichtigen ist.

Wenn bei der Planung eines Einsatzes zusätzlich zu der vorstehend genannten Gesamtdauer weiterhin Pausenzeiten oder dergleichen vorgeschrieben beziehungsweise einzuhalten sind, kann bei der Weiterbildung der Erfindung vorgesehen sein, dass ein einzelner Einsatz eines jeweiligen Objekts aus einer Anzahl von Teileinsätzen gebildet ist, wobei eine Summe der zeitlichen Dauern der Teileinsätze im Wesentlichen die Gesamtdauer des Einsatzes ergibt.

Um auf flexible Weise Beziehungen, Verknüpfungen zwischen einzelnen Datensätzen (Datenbankeinträgen) der verwendeten Datenbank herzustellen beziehungsweise Änderungen an der Datenbankstruktur mit relativ geringem Aufwand realisieren zu können, sieht eine besondere Weiterbildung der erfindungsgemäßen Vorrichtung vor, dass die verwendete Datenbank eine objektorientierte Datenbank ist. Im Zuge einer derartigen Ausgestaltung ist die erfindungsgemäße Vorrichtung im Hinblick auf ihren Einsatzzweck zur Durchführung des erfindungsgemäßen Verfahrens weitaus flexibler als vorbekannte Planungssysteme, die in der Regel relationale Datenbanken mit starrer Struktur verwenden.

Weitere Vorteile und Eigenschaften der vorliegenden Erfindung ergeben sich aus der nachfolgenden Beschreibung eines Ausführungsbeispiels anhand der Zeichnung. Es zeigt:
- Fig. 1: ein schematisches Blockschaltbild einer erfindungsgemäßen Vorrichtung zur Steuerung eines Einsatzes von Objekten;
- Fig. 2: eine detaillierte schematische Ansicht einzelner, in einer Datenbank der Vorrichtung gemäß Fig. 1 enthaltener Datenbankeinträge;
- Fig. 3: eine installierte schematische Darstellung eines Bedarfspostens der Bedarfsvorgabe;
- Fig. 4: eine schematische Darstellung einer bei einer Ausgestaltung des erfindungsgemäßen Verfahrens erzeugten, zeiteinheitüberbrückenden Anordnung einer Bedarfsvorgabe;
- Fig. 5: eine schematische Darstellung einer geschlossenen, zylinderartigen Anordnung der Bedarfsvorgabe gemäß einer weiteren Ausgestaltung des erfindungsgemäßen Verfahrens; und
- Fig. 6: eine schematische Darstellung des Einsatzes eines Objektes bei Durchführung des erfindungsgemäßen Verfahrens.

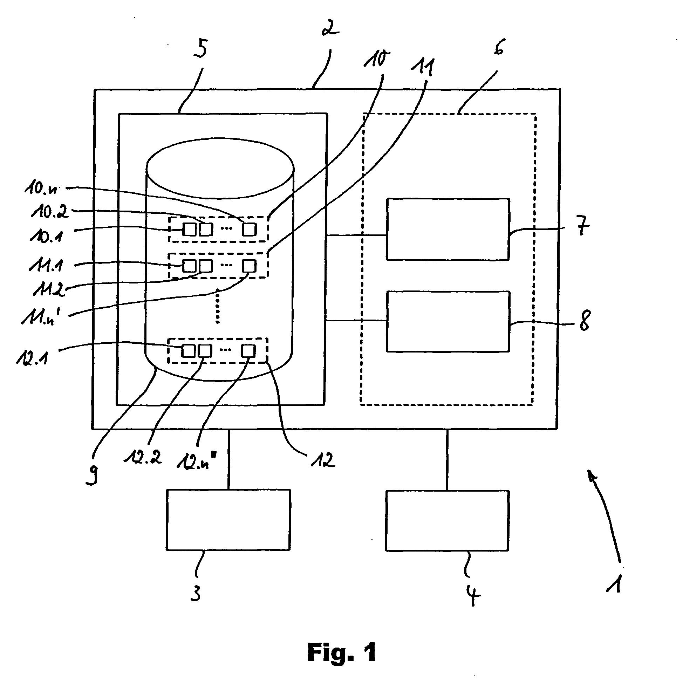

Fig. 1 zeigt anhand eines schematischen Blockschaltbilds eine Ausgestaltung der erfindungsgemäßen Vorrichtung 1 zur Steuerung eines Einsatzes von Objekten, wie Transportvorrichtungen (Fahrzeugen) oder Personen. Die Vorrichtung 1 weist eine Datenverarbeitungsanlage 2 auf, an die eine Eingabeeinheit 3 sowie eine Ausgabeeinheit 4 angeschlossen sind. Die Datenverarbeitungsanlage 2 der erfindungsgemäßen Vorrichtung 1 beinhaltet eine Speichereinheit 5 in Wirkverbindung mit einer Prozessoreinheit 6. In der Prozessoreinheit 6 sind eine Anordnungseinheit 7 sowie eine Bestimmungseinheit 8 ausgebildet, vorzugsweise in softwaretechnischer Form.

Die Eingabeeinheit 3 kann insbesondere als Tastatur, magnetisches/optisches Laufwerk, Netzwerk-Schnittstelle oder dergleichen ausgebildet sein und eignet sich somit speziell auch zum softwarerechnischen Einrichten der Bestimmungseinheit 8 beziehungsweise der Vorrichtung 1 durch Bereitstellen geeigneter Programmcodesequenzen mittels eines Computerprogrammprodukts.

Die Speichereinheit 5 enthält eine Datenbank 9, die vorteilhafter Weise als objektorientierte Datenbank ausgebildet ist. Die Datenbank 9 enthält einzelne Datenbankeinträge 10.1, 10.2, ... 10.n; 11.1, 11.2, ..., 11.n'; 12.1, 12.2, ..., 12.n". Die einzelnen Datenbankeinträge 10.1, 10.2, ... 10.n; 11.1, 11.2, ..., 11.n'; 12.1, 12.2, ..., 12.n" sind entsprechenden Datenbank-Eintragseinheiten 10, 11 beziehungsweise 12 zugeordnet.

Die vorstehend beschriebene Vorrichtung lässt sich erfindungsgemäß zur Durchführung eines Verfahrens zur Steuerung eines Einsatzes von Objekten, wie Transportvorrichtungen oder Personen, einsetzen. Eine bevorzugte Anwendung des erfindungsgemäßen Verfahrens ist die Steuerung eines Einsatzes von Fahrpersonal zur Führung von Objekten in Form von Fahrzeugen des öffentlichen Personennahverkehrs (ÖPNV), beispielsweise U- und S-Bahnen, Straßenbahnen oder Bussen, so dass die vorliegende Erfindung nachfolgend speziell mit Blick auf einen derartigen Einsatzzweck beschrieben ist. Darüber hinaus lässt sich die vorliegende Erfindung jedoch auch auf anderen Gebieten in der Technik einsetzen, beispielsweise beim Kommissionieren von Waren in einem Warenlager oder bei Planung eines Einsatzes von Fahrzeugen zur Erfüllung eines vorgegebenen Fahrplans (Umlaufbildung).

Bezug nehmend auf Fig. 1 wird mittels der Eingabeeinheit 3 ein Bedarf an den Objekten (Fahrpersonal) innerhalb wenigstens einer vorbestimmten Zeiteinheit und auf der Grundlage von Elementen, denen die Objekte zugeordnet werden, vorgegeben, beispielsweise durch manuelle Eingabe seitens einer Bedienperson der erfindungsgemäßen Vorrichtung 1. Innerhalb des gewählten Ausführungsbeispiels entsprechen die Elemente, denen die Objekte zugeordnet werden, einzelnen Fahrzeugumläufen, das heißt dem gesamten fahrplanmäßigen Einsatz eines bestimmten Fahrzeugs von dessen Indienststellung bis zu dessen Außerdienststellung an einem bestimmten Betriebstag. Ein solcher Umlauf lässt sich auch als Bedarfsposten bezeichnen und wird erfindungsgemäß in elektronischer Form in der Datenbank 9 gespeichert. Somit entsprechen einzelne Umläufe oder Bedarfsposten den bereits oben erwähnten Datenbankeinträgen 10.1, 10.2,... 10.n; 11.1, 11.2, ..., 11.n'; 12.1, 12.2, ..., 12.n".

Die Bedarfsposten (Umläufe), das heißt die Datenbankeinträge 10.1, 10.2, ... 10.n; 11.1, 11.2, ..., 11.n'; 12.1, 12.2, ..., 12.n" für jeweils einen Betriebstag ergeben eine entsprechende Bedarfseinheit, welche gerade der bereits oben definierten Datenbank-Eintragseinheit 10, 11, 12 entspricht. Zur Erfüllung eines Fahrplans werden die einzelnen Bedarfsposten (Umläufe) regelmäßig im Hinblick auf einen bestimmten Betriebstag, wie Werktag, Sonn- oder Feiertag, erzeugt und in der Datenbank 9 abgelegt. Die Summe der Datenbankeinträge (Bedarfsposten) 10.1, 10.2, ... 10.n; 11.1, 11.2, ..., 11.n'; 12.1, 12.2, ..., 12.n" beziehungsweise der Datenbank-Eintragseinheiten (Bedarfseinheiten) 10, 11, 12 ergibt den vorgegebenen (Gesamt-)Bedarf an den Objekten.

Im gewählten Beispiel bedeutet dies, dass auf der Grundlage der Datenbankeinträge 10.1, 10.2, ... 10.n; 11.1, 11.2, ..., 11.n'; 12.1, 12.2, ..., 12.n" ein Bedarf an Fahrpersonal definiert ist, der benötigt wird, um alle geplanten Umläufe realisieren zu können, das heißt jedem Element ein Objekt zuzuordnen. Konkret bedeutet dies: Jedes eingesetzte Fahrzeug (Element) muss jederzeit während eines Umlaufs ein zugeordnetes Objekt (Fahrer) besitzen.

Wie anhand des gewählten Ausführungsbeispiels deutlich wird, sind bei der Steuerung eines Objekteinsatzes regelmäßig eine Vielzahl von Rahmenbedingungen zu beachten. Vorliegend kann beispielsweise ein bestimmtes Objekt einem Element, das heißt ein Fahrer einem umlaufenden Fahrzeug nur zu bestimmten Zeiten und an bestimmten Orten zugeordnet beziehungsweise zugeführt werden. So kann beispielsweise ein Fahrer nur dann in ein Fahrzeug einsteigen, beispielsweise um einen bisherigen Fahrer abzulösen, wenn er sich zur selben Zeit wie das Fahrzeug an einer bestimmten Haltestelle befindet, wobei diese Haltestelle zusätzlich regelmäßig noch über bestimmte Einrichtungen, wie einen Pausenraum oder dergleichen, verfügen muss. Außerdem ist dafür Sorge zu tragen, dass ein pausierender Fahrer (Objekt) im Anschluss an seine Pausenzeit wieder einem Element zuordenbar sein muss. Außerdem sind für jeden Fahrer noch eine maximale gesamte Einsatzdauer sowie die zulässige maximale ununterbrochene aktive Einsatzdauer (Lenkzeit im Sinne eines Teileinsatzes) zu berücksichtigen. Eine weitere Problematik existiert dahingehend, dass aus Kostengründen eine zur Deckung des Bedarfs erforderliche Gesamtanzahl an Objekten (Fahrern) möglichst klein gehalten werden sollte, sodass die zulässige Einsatz-Gesamtdauer für jedes Objekt möglichst voll ausgeschöpft werden sollte, wobei jedoch die vorstehend erwähnten Rahmenbedingungen zu berücksichtigen sind.

Bei der Lösung dieses Optimierungsproblems ergibt sich ausgehend von der Beschreibung der Fig. 1 die besondere Schwierigkeit, dass der (Gesamt-)Bedarf in einzelne Bedarfsposten gequantelt auf der Grundlage einer Anzahl von Bedarfseinheiten vorgegeben ist, wobei die Bedarfseinheiten jeweils vorbestimmten Zeiteinheiten entsprechen. Im Zuge des vorgestellten Ausführungsbeispiels handelt es sich bei den genannten Zeiteinheiten - wie bereits erwähnt - um Betriebstage, das heißt jeweils ununterbrochene, nach dem Kalender bestimmte Zeiträume, die jedoch gegenüber einem normalen Kalendertag verschoben und/oder verlängert oder verkürzt sein können. Beispielsweise kann ein Betriebstag um 3.00 Uhr morgens an einem bestimmten Kalendertag beginnen und bis 3.00 Uhr morgens an einem folgenden Kalendertag andauern. Auch Betriebstage mit einer Dauer von deutlich mehr als 24 Stunden sind möglich, beispielsweise in Großstädten und Metropolen, die ein Fahrplanangebot rund um die Uhr anbieten. Eine derartige Unterteilung des (Gesamt-)Bedarfs in Bedarfseinheiten/Betriebstage ergibt sich insbesondere aufgrund der Differenzierung des Fahrplanangebots, wobei beispielsweise an normalen Werktagen ein anderer Fahrplan und entsprechend ein anderes Umlaufsaufkommen realisiert wird als an Wochenenden oder Feiertagen.

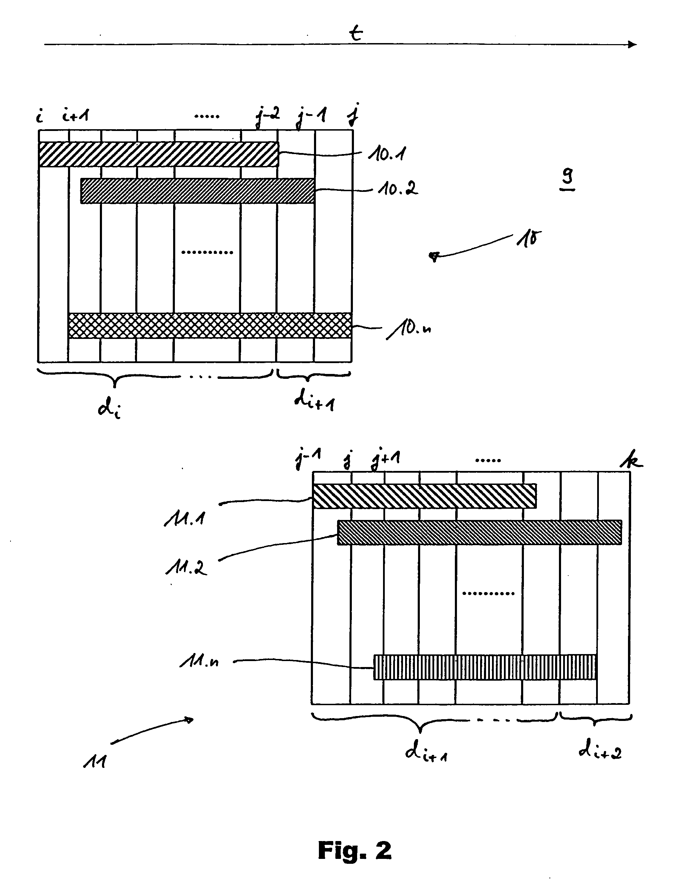

Aufgrund der gequantelten Bedarfsplanung in Bedarfseinheiten, die zeitlich sogar überlappend ausgebildet sein können, wenn beispielsweise ein vorhergehender und ein nachfolgender Betriebstag einen gemeinsamen Zeitraum eines Kalendertags beinhalten, besteht zunächst ausgehend von den Datenbankeinträgen 10.1, 10.2, ... 10.n; 11.1, 11.2, ..., 11.n'; 12.1, 12.2, ..., 12.n" keinerlei Verknüpfung von unterschiedlichen Zeiteinheiten zugeordneten Bedarfseinheiten, was in der Praxis zu einer nur sub-optimalen Lösung des weiter oben genannten Optimierungsproblems führt. Fig. 2 verdeutlicht nochmals diesen Sachverhalt.

Fig. 2 zeigt schematisch in detaillierterer Form als Fig. 1 einen Ausschnitt des Speicherinhalts der Datenbank 9. Dargestellt sind die Eintragseinheiten (Bedarfseinheiten) 10 und 11 aus Fig. 1 mit ihren jeweiligen Datenbankeinträgen (Bedarfsposten) 10.1, 10.2, ... 10.n; 11.1, 11.2, ..., 11.n', wobei in Fig. 2 zusätzlich explizit die zeitliche Erstreckung der Bedarfseinheit beziehungsweise Bedarfsposten dargestellt ist (Zeitkoordinate t).

Gemäß Fig. 2 beginnt eine erste Bedarfseinheit (Betriebstag) 10 zur Zeit t=i und dauert bis zur Zeit t=j. Der Bedarf innerhalb der Bedarfseinheit 10 ergibt sich als Summe der einzelnen Bedarfsposten 10.1, 10.2, ... 10.n, die gemäß dem gewählten Ausführungsbeispiel Umläufe von Fahrzeugen, wie beispielsweise U-Bahnen oder dergleichen, darstellen. Zur Deckung des Bedarfs sind den einzelnen Bedarfsposten Objekte in Form von Fahrern unter Beachtung der weiter oben angesprochenen Randbedingungen zuzuordnen. Der auf dem Zeitintervall [t=i; t=j] definierte Betriebstag 10 ist gemäß Fig. 2 gegenüber dem Kalendertag verschoben. So gehört ein erster Teil des Betriebstags 10 zu einem Kalendertag dᵢ und ein zweiter Teil des Betriebstags 10 zu einem Kalendertag dᵢ₊₁.

Weiterhin ist in Fig. 2 eine zweite Bedarfseinheit (Betriebstag) 11 mit Bedarfsposten (Umläufen) 11.1, 11.2, ..., 11.n' gezeigt. Die zweite Bedarfseinheit 11 beginnt bei t=j-1 und endet bei t=k, sodass der entsprechende Betriebstag auf dem Zeitintervall [t=j-1; t=k] definiert ist. Gemäß Fig. 2 liegt ein Teil der Bedarfseinheit (Betriebstag) 11 innerhalb eines Kalendertages dᵢ₊₂, während ein anderer Teil innerhalb des auch für die erste Bedarfseinheit 10 relevaten Kalendertags dᵢ₊₁ liegt. Gemäß Fig. 2 überlappen die Bedarfseinheiten 10, 11 auf dem Zeitintervall [t=j-1; t=j], weisen jedoch im Zuge der Bedarfsplanung darüber hinaus keinerlei weitere Verknüpfungen auf.

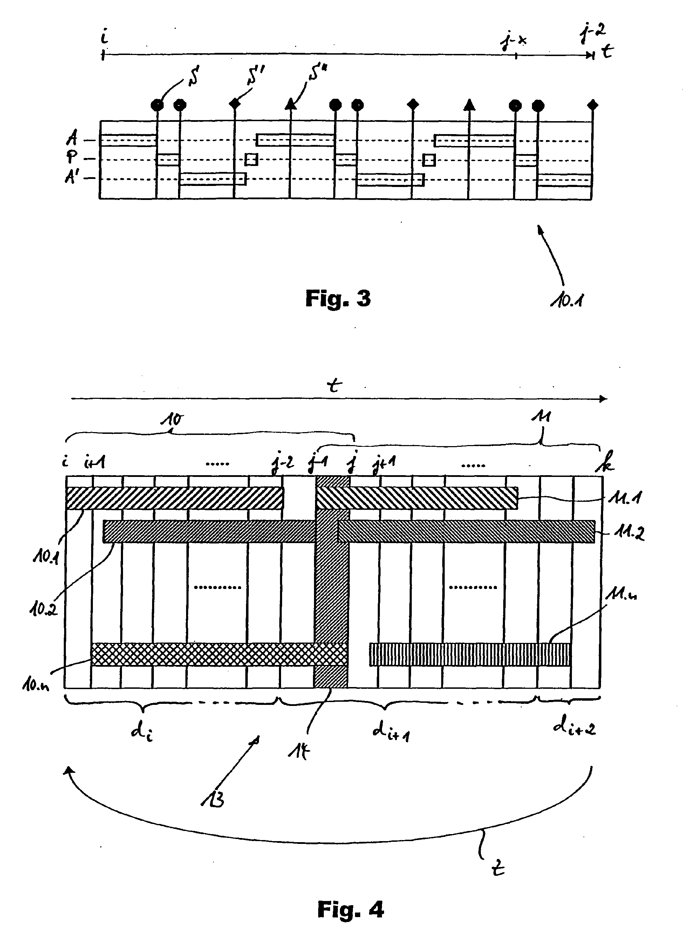

Fig. 3 zeigt schematisch in detaillierterer Form den Bedarfsposten 10.1 gemäß der Figuren 1 und 2, das heißt einen vorgegebenen Umlauf zur Realisierung eines vorgegebenen Fahrplans und verdeutlicht die Anforderungen bei der Zuordnung von Objekten (Fahrern) zu den einzelnen Elementen (Fahrzeuge beziehungsweise Umläufe). Gemäß Fig. 3 beginnt der Bedarfsposten (Umlauf) 10.1 zur Zeit t=i und dauert bis zur Zeit t=j-2 (vergleiche Fig. 2). Die unterschiedlichen, entlang horizontaler gestrichelter Linien A, P, A', angeordneten Balken innerhalb des Bedarfspostens 10.1 symbolisieren unterschiedliche Arten der Zuordnung eines Objekts (Fahrers) zu dem betreffenden Element (Fahrzeug beziehungsweise Umlauf), wobei die Balken entlang der Linien A, A' für einen aktiven Einsatz des Objekts, das heißt für eine Lenkzeit beziehungsweise aktive Führertätigkeit stehen, während die (kürzeren) Balken entlang der Linie P Pausenzeiten, das heißt passive Einsätze des betreffenden Objekts (Fahrers) symbolisieren. Dabei darf für ein einzelnes Objekt (Fahrer) die zeitliche Summe aufeinanderfolgender Teileinsätze (aktiv/passiv) eine gewisse maximale Gesamtdauer nicht überschreiten, wobei zudem ein einzelner aktiver Teileinsatz (Linien beziehungsweise Balken A, A') ebenfalls nicht länger als eine zulässige maximale Dauer sein darf.

In Fig. 3 steht die Bedarfseinheit 10.1 für einen Fahrzeugumlauf auf einer bestimmten Strecke, so dass die Balken bei A Hinfahrten auf dieser Strecke und die Balken bei A' entsprechend Rückfahrten auf derselben Strecke symbolisieren. Die vertikalen Linien in Fig. 3 mit zugeordneten Symbolen S, S', S" stellen Einsatzorte sowie entsprechend zugehörige Einsatzzeiten dar, an beziehungsweise zu denen eine Neuzuordnung eines Objekts (neuer Fahrer) zu dem entsprechenden Element (Fahrzeug) innerhalb der Bedarfseinheit 10.1 möglich ist.

Konkret bedeutet dies für das vorliegende Ausführungsbeispiel: An den mit den genannten Symbolen S, S',S" bezeichneten Einsatzorten in Verbindung mit den entsprechenden Einsatzzeiten kann zur Deckung des vorgegebenen Bedarfs bei Einhaltung der weiter oben genannten Randbedingungen ein Objekt-/Fahrerwechsel vorgenommen werden. Dabei ist es grundsätzlich möglich, dass die eingesetzten Objekte (Fahrer) zwischen einzelnen Bedarfsposten, wie den Bedarfsposten (Umläufen) 10.1, 10.2 in Fig. 2 wechseln, wenn für letztere insbesondere gemeinsame Einsatzorte, wie gemeinsam angefahrene Haltestellen, vorgesehen sind.

Eine besondere Problematik aufgrund der bereits angesprochenen fehlenden Verknüpfung zwischen den einzelnen Datenbankeinträgen (Bedarfsposten) 10.1, 10.2, ... 10.n; 11.1, 11.2, ..., 11.n'; 12.1, 12.2, ..., 12.n" (Fig. 1) ergibt sich dann, wenn beispielsweise zu dem mit t=j-x bezeichneten Zeitpunkt in Fig. 3 die maximal zulässige Gesamt-Einsatzdauer eines Objekts (Fahrers) erreicht ist, sodass zur Deckung des Bedarfs bezüglich des Bedarfspostens 10.1 (Umlauf) noch das Zeitintervall [t=j-x; t=j-2] abzudecken ist. Wenn nicht zufällig ein anderer eingesetzter Fahrer zur Zeit t=j-x dem Umlauf 10.1 zugeordnet werden kann, das heißt auf das entsprechende Fahrzeug wechselt, dessen bisherige Einsatzdauer die Abdeckung des genannten Zeitintervalls noch zulässt, ist zur Deckung des Bedarfs ein zusätzliches Objekt (Fahrer) erforderlich, oder eine zur Objekt-Einsatzplanung eingesetzte Bedienperson (der sogenannte Dienstplaner) registriert an dieser Stelle ein grundlegendes Zuordnungsproblem, welches eine vollständige Überarbeitung der bis dahin für den Bedarfsposten beziehungsweise die übergeordnete Bedarfseinheit (Betriebstag) geleistete Planungsarbeit erforderlich macht.

Zur Vermeidung eben dieser Problematik schlägt die vorliegende Erfindung vor, dass zum Bestimmen der erforderlichen Anzahl und Einsatzcharakteristiken der Objekte aus den einzelnen Datenbankeinträgen 10.1, 10.2.... 10.n; 11.1, 11.2, ....., 11.n'; 12.1, 12.2, ..., 12.n" gemäß Fig. 1 mittels der Anordnungseinheit 7 eine die Zeiteinheit, das heißt die Bedarfseinheiten 10, 11, 12 (Betriebstage) überbrückende Anordnung der Bedarfsvorgabe erzeugt und anschließend mittels der in Bestimmungseinheit 8 die Einsatzsteuerung auf der Grundlage dieser besonderen Anordnung durchgeführt wird.

Ausgehend von dem in Fig. 2 dargestellten Bedarf ist dies in Fig. 4 schematisch dargestellt.

Fig. 4 zeigt schematisch eine (Betriebs-)Tage übergreifende Anordnung 13 der Bedarfsvorgabe, auf deren Grundlage sich die Steuerung eines Einsatzes von Objekten gemäß der vorliegenden Erfindung durchführen lässt. Gemäß Fig. 4 werden die auf der Grundlage unterschiedlicher Zeiteinheiten definierten Bedarfseinheiten 10, 11 hintereinander angeordnet, so dass sie in einen Überlappungsbereich 14 ([t=j-1; t=j]) überlappen und die Zeiteinheiten überbrückende Anordnung 13 bilden, auf deren Grundlage die Objekt-Einsatzsteuerung (Dienstplanung) unter Vermeidung der oben genannten speziellen Problematik durchführbar ist, insbesondere automatisch durch ein hierfür ausgebildetes (Software-)Modul (nicht gezeigt), das in die Bestimmungseinheit 8 integriert sein kann oder manuell durch eine Bedienperson, welche sich der Anordnung 13 bedient, indem diese beispielsweise über die Ausgabeeinheit 4 (Fig. 1) ausgegeben wird. Die Ausgabeeinheit 4 kann dabei insbesondere als Bildschirm oder Drucker ausgebildet sein.

Bei einer automatischen Bestimmung der zur Deckung des Bedarfs erforderlichen Anzahl einzusetzender Objekte sowie deren Einsatzcharakteristiken kann insbesondere die Bestimmungseinheit 8 direkt an einer anlageninternen Darstellung der Anordnung 13 tätig werden. Bei entsprechender manueller Bestimmung betrachtet die Bedienperson die Anordnung 13 mittels der Ausgabeeinheit 4 und tätigt die zur Bestimmung erforderlichen Eingaben mittels der Eingabeeinheit 3, welche diese entsprechend an die Bestimmungseinheit 8 übermittelt.

Alternativ zu der vorstehend beschriebenen Ausgestaltung gemäß Fig. 4 ist es im Rahmen der vorliegenden Erfindung nicht erforderlich, aneinander angrenzende Bedarfseinheiten (Betriebstage) 10, 11 zum Erstellen der überbrückenden Anordnung 13 vollständig abzubilden. So kann es zur Vermeidung der speziellen oben genannten Problematik ausreichen, die Anordnung 13 nur auf einem begrenzten Zeitintervall um den Überlappungsbereich 14 herum zu erzeugen, beispielsweise auf dem Zeitintervall [j-G/2; j+G/2], wobei G die maximal zulässige Gesamt-Einsatzdauer für ein Objekt (Fahrer) bezeichnet.

Alternativ kann die überbrückende Anordnung 13 auch noch weitere Übergänge zwischen Zeiteinheiten (Betriebstagen) umfassen, so dass sich eine quasi endloskontinuierliche überbrückende Anordnung 13 ergibt.

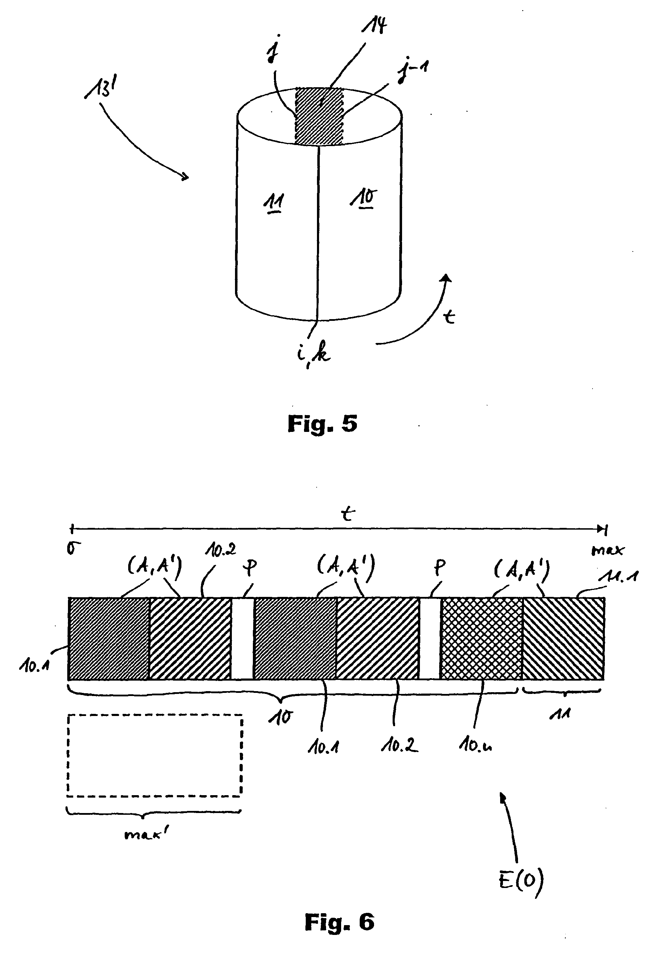

Gemäß einer besonderen bevorzugten Ausgestaltung des erfindungsgemäßen Verfahrens kommt es dabei zu einer sogenannten Zylinderbildung, was in Fig. 4 durch den Pfeil Z symbolisiert ist. Wird nämlich bei der Anordnung 13 gemäß Fig. 4 deren Endzeitpunkt t=k mit dem Anfangszeitpunkt t=i identifiziert, ergibt sich eine geschlossene zylinderartige Anordnung, bei der ein wiederkehrender Bedarf in Form einer zahlenmäßig beschränkten, sich wiederholenden Abfolge von speziell zwei Zeiteinheiten 10, 11 definiert ist. Dies ist in Fig. 5 zur Verdeutlichung nochmals schematisch dargestellt.

Fig. 5 zeigt schematisch die vorstehend beschriebene zylinderartige überbrückende Anordnung 13' der Bedarfsvorgabe gemäß den Figuren 1 und 2. Der Anfangszeitpunkt t=i und der Endzeitpunkt t=k der Bedarfsvorgabe fallen zusammen, so dass sich für den (Gesamt-)Bedarf eine geschlossene Zylinderanordnung ergibt, auf deren Grundlage anschließend die Einsatzsteuerung (Dienstplanung) erfolgen kann, sei es automatisch oder manuell.

Selbstverständlich kann die Zylinderanordnung 13' gemäß Fig. 5 mehr als nur zwei Zeiteinheiten (Betriebstage) auf der Grundlage der Datenbank-Eintragseinheiten 10, 11 umfassen. Alternativ ist es auch möglich, eine entsprechende Zylinderanordnung 13' unter Verwendung nur einer einzelnen Zeiteinheit zu bilden, wobei entsprechend Anfang und Ende der betreffenden Zeiteinheit, beispielsweise eines bestimmten Betriebstages, zusammenfallen.

Abschließend zeigt die Fig. 6 eine mit Hilfe des erfindungsgemäßen Verfahrens auf der Grundlage der vorstehend erläuterten überbrückenden Anordnungen 13, 13' bestimmte Einsatz-Zuordnung eines Objekts (Fahrer) zu Elementen (Fahrzeugen) für die Deckung eines vorgegebenen (Teil-)Bedarfs. In Fig. 6 ist der Einsatz E(O) eines Objekts schematisch dargestellt, beginnend mit einer Einsatz-Anfangszeit t=0 bis zu einer Einsatz-Endzeit t=max, wobei eine Zeitdifferenz zwischen dem Einsatz-Anfangszeitpunkt und dem Einsatz-Endzeitpunkt die zulässige Einsatz-Gesamtdauer für das betreffende Objekt (Fahrer) nicht überschreitet.

Die weiteren Bezugszeichen in Fig. 6 entsprechen in ihrer Bedeutung den bereits in den Figuren 2 bis 5 verwendeten Bezugszeichen. Demnach ist das Objekt O (der Fahrer) zunächst aktiv (A, A') zur Deckung des Bedarfspostens 10.1, das heißt des entsprechenden Umlaufs eingesetzt. Anschließend wechselt der Fahrer auf den Bedarfsposten (Umlauf) 10.2. Daran schließt sich eine Pause P an, woraufhin der Fahrer erneut aktiv (A, A') zur Deckung des nächsten Bedarfspostens 10.1 und anschließend des Bedarfspostens 10.2 eingesetzt ist. Nach einer weiteren Pause P wechselt der Fahrer auf das den Bedarfsposten 10.n bildende Element (Fahrzeug, Umlauf). Dabei erfolgten alle bislang beschriebenen Einsätze des Objekts (Fahrer) innerhalb der Zeit- und Bedarfseinheit 10. Nunmehr erfolgt jedoch auf der Grundlage der überbrückenden Anordnung 13, 13' gemäß Fig. 4, 5 ein Wechsel zur Zeit- und Bedarfseinheit 11, woraufhin das Objekt (Fahrer) zum Abschluss seines Einsatzes E(O) im Rahmen des Bedarfspostens 11.1 (vergleiche Fig. 1, 3, 4) eingesetzt wird, jedoch nicht länger als bis zum Erreichen der Zeit t=max. Gemäß Fig. 6 ergibt die Summe der zeitlichen Dauern der aktiven (A, A') und der passiven (P) Teileinsätze des Objekts (Fahrer) im Wesentlichen die Gesamtdauer des Einsatzes E(O). Dabei symbolisiert das gestrichelte Rechteck in Fig. 6 die maximal zulässige Zeitdauer max' eines fortgesetzten aktiven (Teil-) Einsatzes (A, A') des Objekts, der bei der Einsatzsteuerung (Dienstplanung) nicht überschritten werden darf.

Zusätzlich zu der vorstehend exemplarisch ausführlich erläuterten tagesübergreifenden Umlauf- und Dienstplanung lassen sich im Zuge des erfindungsgemäßen Verfahrens beziehungsweise für den Einsatz der erfindungsgemäßen Vorrichtung auch folgende weitere Aufgabenstellungen lösen:
1. Anfang-Ende Problematik
   Verkehrsunternehmen, welche mit mehreren Fahrzeugeinsatzstellen (FES) (Betriebshöfe, Werkstätten, Depots, Abstellplätze, Einsatzorte, etc.) den Betrieb ihres Unternehmens steuern, haben sicherzustellen, dass im Regelfall genau so viele Fahrzeuge an einer FES beginnen wie enden. Darüber hinaus ist zu berücksichtigen, dass die Fahrzeuge für planmäßige und außerplanmäßige Arbeiten, wie Instandhaltungsarbeiten, Reinigung, Betankung, Besandung, etc., an andere FES überführen werden müssen.
2. Auslastung von Fahrzeugen und Werkstätten
   Um sicherzustellen, dass jedes Fahrzeug im Einsatzzeitraum möglichst die gleiche Fahrleistung erbringt, sind die Fahrzeuge auf Fahrzeugumläufe in Regelreihenfolgen analog der Dienstreihenfolgebildung abzubilden.
3. Mehrtägige Umläufe
   Speziell in Großstädten und Metropolen, welche ein Fahrplanangebot rund um die Uhr anbieten, bleiben Fahrzeuge über zwei oder mehrere Tage im Einsatz, bis sie wieder in eine FES einrücken.
4. Umlauftätigkeiten
   Bei der Planung existieren sowohl dienst- als auch fahrzeugbezogene Tätigkeiten (z.B. Fahrzeugvorbereitung, tanken). Hierbei ist zwischen täglichen und zeitbeziehungsweise kilometerabhängigen Tätigkeiten zu unterscheiden.
5. Paarigkeit und Überführung von Fahrzeugen
   Sofern Fahrzeuge an andere FES überführt werden müssen (beispielweise wenn die Heimat-FES keine Werkstatt hat) oder Fahrten aufgrund ihrer Länge nicht mehr am aktuellen Tag an die Ausgangs-FES zurückkehren können, wird die "Paarigkeit" eines Umlaufs erst über zwei oder mehrere Tage erreicht.
6. Begrenzte Zahl von Abstellplätzen an einer FES
   Werden Fahrzeuge, speziell U-Bahnen, zum Betriebsende in den Kehranlagen der U-Bahn Stationen abgestellt, so ist sicherzustellen, dass am Folgetag ebenso viele Fahrzeuge wieder die FES verlassen. Dies kann erfindungsgemäß schon bei der Fahrplanung berücksichtigt werden.
7. Nachtgeteilte Dienste
   Bei kurzen Übergängen zwischen Betriebsende und Betriebsanfang und bei FES, die nur schlecht erreichbar sind, kann es sich anbieten, so genannte "Nachtgeteilte Dienste" über zwei Tage zu planen.

### Bezugszeichenliste

- 1: Vorrichtung
- 2: Datenverarbeitungsanlage
- 3: Eingabeeinheit
- 4: Ausgabeeinheit
- 5: Speichereinheit
- 6: Prozessoreinheit
- 7: Anordnungseinheit
- 8: Bestimmungseinheit
- 9: Datenbank
- 10: erste Bedarfseinheit
- 10.1, 10.2, ...,10.n: Datenbankeintrag, Bedarfsposten
- 11: zweite Bedarfseinheit
- 11.1, 11.2, ..., 11.n': Datenbankeintrag, Bedarfsposten
- 12: dritte Bedarfseinheit
- 12.1,12.2,...,12.n": Datenbankeintrag, Bedarfsposten
- 13,13': Anordnung
- 14: Überlappungsbereich
- t: Zeit
- Z: Zylinderbildung
- A,A': aktiver (Teil-)Einsatz
- P: passiver (Teil-)Einsatz, Pause
- E(O): Objekteinsatz
- max: maximal zulässige Gesamt-Einsatzdauer
- max': maximal zulässige aktive (Teil-)Einsatzdauer
- dᵢ, dᵢ₊₁, dᵢ₊₂: Kalendertag
- S,S',S": Einsatzort/Einsatzzeit

## Patentansprüche

1. Vorrichtung (1) zur Steuerung eines Einsatzes (E(O)) von Objekten, wie Transportvorrichtungen oder Personen, welche eine zum Vorgeben eines Bedarfs an den Objekten innerhalb wenigstens einer vorbestimmten Zeiteinheit (10, 11, 12) und auf der Grundlage von Elementen, denen die Objekte zugeordnet werden, ausgebildete Eingabeeinheit (3), sowie eine zum Speichern des vorgegebenen Bedarfs in elektronischer Form als Bedarfsvorgabe in einer Datenbank (9) ausgebildete Speichereinheit (5), aufweist,
**gekennzeichnet durch**
eine zum Erzeugen einer die Zeiteinheit (10, 11, 12) überbrückenden Anordnung (13, 13') der Bedarfsvorgabe aus einzelnen Datenbankeinträgen (10.1, 10.2, ... 10.n; 11.1, 11.2, ..., 11.n'; 12.1, 12.2, ..., 12.n") ausgebildete Anordnungseinheit (7) und eine zum Bestimmen einer zur Deckung des Bedarfs erforderlichen Anzahl einzusetzender Objekte sowie zum Bestimmen von Einsatzcharakteristiken der einzusetzenden Objekte auf der Grundlage der erzeugten Anordnung (13, 13') ausgebildete Bestimmungseinheit (8).

2. Vorrichtung (1) nach Anspruch 1,
**dadurch gekennzeichnet,**
**dass** die Datenbank (9) eine objektorientierte Datenbank ist.

3. Vorrichtung nach Anspruch 1 oder 2,
**dadurch gekennzeichnet,**
**dass** die Anordnungseinheit (7) zum Erzeugen der Anordnung (13') in Form einer geschlossenen, zylinderartigen Anordnung ausgebildet ist, wobei ein wiederkehrender Bedarf in Form einer zahlenmäßig beschränkten, sich wiederholenden Abfolge von Zeiteinheiten (10, 11, 12) definiert ist.

4. Vorrichtung nach einem der Ansprüche 1 bis 3,
**dadurch gekennzeichnet,**
**dass** die Zeiteinheit (10, 11, 12) ein um ein bestimmtes Zeitmaß (t) verschobner und/oder verlängerter oder verkürzter Kalendertag (dᵢ, dᵢ₊₁, dᵢ₊₂) ist.

5. Vorrichtung nach einem der Ansprüche 1 bis 3,
**dadurch gekennzeichnet,**
**dass** die Bestimmungseinheit (8) zum Bestimmen der Deckung wenigstens eines Teils des Bedarfs durch den Einsatz (E(O)) zumindest eines Objekts auf der Grundlage verschiedener Zeiteinheiten (10, 11) ausgebildet ist.

6. Vorrichtung nach einem der Ansprüche 1 bis 4,
**dadurch gekennzeichnet,**
**dass** der Bedarf aus einer Anzahl zeitlich und/oder örtlich gebundener Bedarfsposten (10.1, 10.2, ... 10.n; 11.1, 11.2, ..., 11.n'; 12.1, 12.2, ..., 12.n") gebildet ist.

7. Vorrichtung nach einem der Ansprüche 1 bis 5,
**dadurch gekennzeichnet,**
**dass** ein einzelner Einsatz (E(O)) eines jeweiligen Objekts in seiner Gesamtdauer (max) zeitlich begrenzt ist.

8. Vorrichtung nach einem der Ansprüche 1 bis 6,
**dadurch gekennzeichnet,**
**dass** ein einzelner Einsatz (E(O)) eines jeweiligen Objekts aus einer Anzahl von Teileinsätzen (A, A', P) gebildet ist, wobei eine Summe der zeitlichen Dauern der Teileinsätze im Wesentlichen die Gesamtdauer (max) des Einsatzes ergibt.

9. Verfahren, insbesondere zur Ausführung auf einer Vorrichtung gemäß einem der vorstehenden Ansprüche, zur Steuerung eines Einsatzes (E(O)) von Objekten, wie Transportvorrichtungen oder Personen, wobei ein Bedarf an den Objekten innerhalb wenigstens einer vorbestimmten Zeiteinheit (10, 11, 12) und auf der Grundlage von Elementen, denen die Objekte zugeordnet werden, vorgegeben und in elektronischer Form als Bedarfsvorgabe in einer Datenbank (9) gespeichert wird und wobei eine zur Deckung des Bedarfs erforderliche Anzahl von Objekten sowie deren Einsatzcharakteristiken, wie Einsatzort (S,S',S"), Einsatzzeit und/oder Einsatzdauer, bestimmt werden,
**dadurch gekennzeichnet,**
**dass** zum Bestimmen der Anzahl und der Einsatzcharakteristiken aus einzelnen Datenbankeinträgen (10.1, 10.2, ... 10.n; 11.1, 11.2, ..., 11.n'; 12.1, 12.2, ..., 12.n") eine die Zeiteinheit überbrückende Anordnung (13, 13') der Bedarfsvorgabe erzeugt und die Einsatzsteuerung auf der Grundlage dieser Anordnung (13, 13') durchgeführt wird.

10. Computerprogrammprodukt zur Steuerung eines Einsatzes (E(O)) von Objekten, wie Transportvorrichtungen oder Personen, mit Programmcodesequenzen, bei deren Ausführung in einer Datenverarbeitungsanlage (2) ausgehend von einem innerhalb wenigstens einer vorbestimmten Zeiteinheit (10, 11, 12) und auf der Grundlage von Elementen, denen die Objekte zugeordnet werden, vorgegebenen Bedarf an den Objekten sowie dessen Abspeicherung in elektronischer Form in einer Datenbank (9) ein Verfahren mit den Merkmalen des Anspruchs 9 durchgeführt wird.
